# EUROPEAN PATENT SPECIFICATION

(11) **EP 1 690 453 B1**
(45) Date of publication and mention of the grant of the patent: **11.12.2019**
(21) Application number: 06101569.9
(22) Date of filing: 13.02.2006
(51) Int. Cl.: A21B 1/48, A21B 1/24, A21B 1/26

(54) **CONTINUOUS OVEN FOR THE TREATMENT OF FOOD PRODUCTS**
DURCHLAUFOFEN ZUR BEHANDLUNG VON NAHRUNGSMITTELN
FOUR À CONVOYEUR POUR LE TRAITEMENT DE PRODUITS ALIMENTAIRES

(30) Priority: 11.02.2005 NL 1028252
(43) Date of publication of application: 16.08.2006
(73) Proprietor: GEA Food Solutions Bakel B.V., 5761 EN Bakel (NL)
(72) Inventor: Kuenen, Hendrikus Antonius Jacobus, 5825 DA Overloon (NL)
(74) Representative: Kutzenberger Wolff & Partner

(56) References cited:
- EP-A- 1 221 575
- EP-A1- 0 943 275
- WO-A-88/09124
- WO-A1-85/05545
- GB-A- 2 045 593
- US-A- 4 252 055
- US-A- 4 563 945

## Description

The invention relates to the treatment of food products in a continuous oven.

Such an oven for heating food products is disclosed in EP-A 312 335, EP 0 943 275 A1, GB 2 045 593 A, EP 1 221 575 A, US 4 563 945 A, WO 88/09124 and WO 85/05545 A1. In the case of the oven disclosed in EP-A-312 335 the hot air is fed transversely over the conveyor belt from the two longitudinal sides of the continuous oven. The hot air subsequently flows in the longitudinal direction of the conveyor belt via a return point back to a fan. The disadvantage of this known continuous oven is that the air flow is not very suitable for producing browning of the outside of the food products. However, the provision of a crisp brown crust is very desirable for certain food products. It makes these products more attractive to the consumer, who consequently experiences a better taste.

The aim of the invention is therefore to provide a continuous oven of the abovementioned type wherein it is also possible to brown the outside of the food products. Said aim is achieved by also creating a hot air flow transversely to and directed towards a surface of the conveyor belt.

The problem is solved with a continuous oven according to claim 1

The invention relates to a continuous oven for the treatment of food products. This continuous oven comprises an elongated housing, an endless conveyor belt that extends in the longitudinal direction through the housing and on which food products can be conveyed over a stretch between an input and an output of the oven, hot air heating means, as well as hot air flow guide means for making hot air flow in the longitudinal direction along the conveyor belt over part of said stretch. Such a continuous oven is also disclosed in EP-A 312 335. According to the invention provision is made for the hot air flow guide means also to be arranged for making hot air flow in the transverse direction to and directed towards a surface of the conveyor belt. This takes place over a different part of said stretch.

In order to obtain the desired degree of browning of the food products, the hot air flow guide means comprise jet means for delivering jets of hot air in the direction of, and essentially perpendicular to, a surface of the conveyor belt. Said jet means can extend above and/or below the belt.

For the purpose of regulated circulation of the hot air, a divider extends above the conveyor belt. A heat source for heating the air is situated above this divider, while return openings are situated at both ends of said divider for making the air circulate past the heat source and in the longitudinal direction along the conveyor belt. For making the air circulate, a fan is provided, preferably at the location of one of the return openings.

The divider can be extended as far as one of the longitudinal ends of the housing, in such a way that the fan is connected to a return opening in the divider near said longitudinal end.

The conveyor belt is accommodated in an air jet chamber over at least part of its length. Said air jet chamber is bounded by at least one longitudinal boundary that extends along the conveyor belt; the longitudinal boundary is provided with passages for generating jets of air.

The longitudinal boundary comprises boundary plates that extend above and below the conveyor belt and are each provided with passages. Furthermore, the longitudinal boundary can also have boundary plates extending alongside the conveyor belt on either side. In particular, a passage for hot air can be situated on either side of the longitudinal boundary, which passages extend essentially in the vertical direction.

The invention will be explained in more detail below with reference to an illustrative embodiment shown in the figures.
Figure 1 shows an exposed side view of the continuous oven according to the invention.
Figure 2 shows a plan view.
Figure 3 shows a cross-section along III-III in Figure 1.
Figure 4 shows an enlarged section through a part of the continuous oven.
Figure 5 shows a section along V-V in Figure 4.

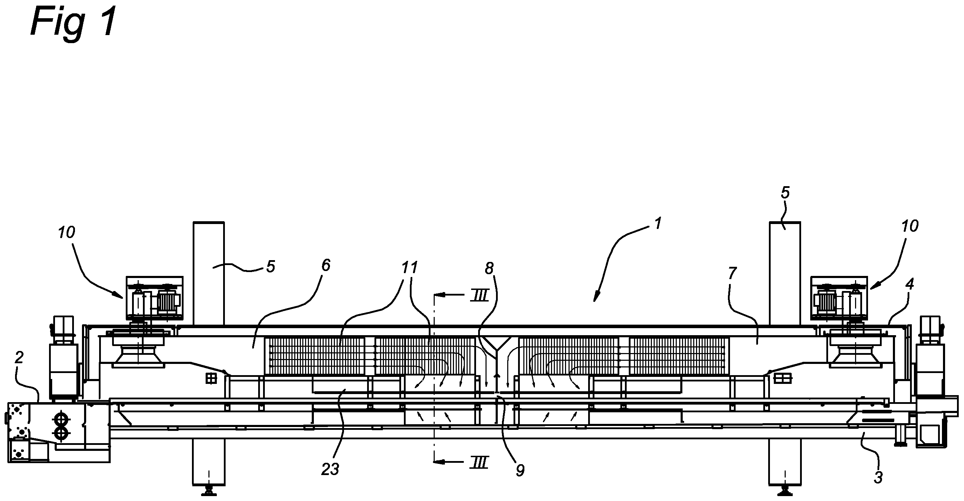

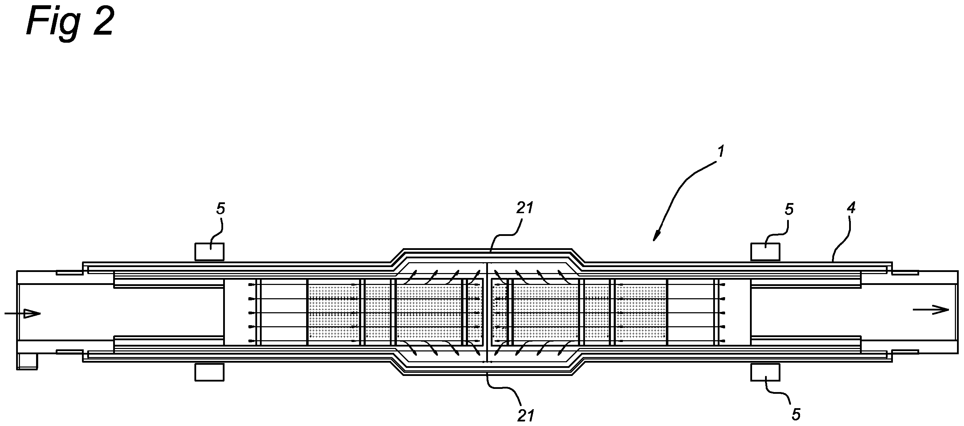

The continuous oven shown in Figures 1 - 5 according to the invention comprises an elongated housing, indicated in its entirety by 1, through which an endless conveyor belt 2 is run. The housing 1 comprises a tray 3, relative to which the cap 4 can be moved up and down. For this purpose, the cap 4 is suspended by means of lifting means which are known per se.

The interior of the oven is divided into two chambers 6, 7, which are separated by the partition wall 8. The conveyor belt 2 is run through the partition wall 8 via the opening 9 in the partition wall 8.

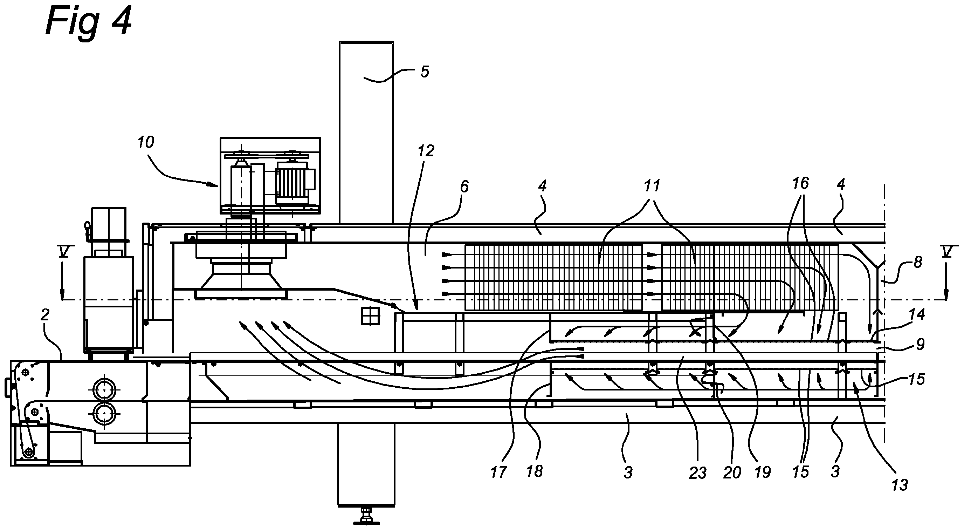

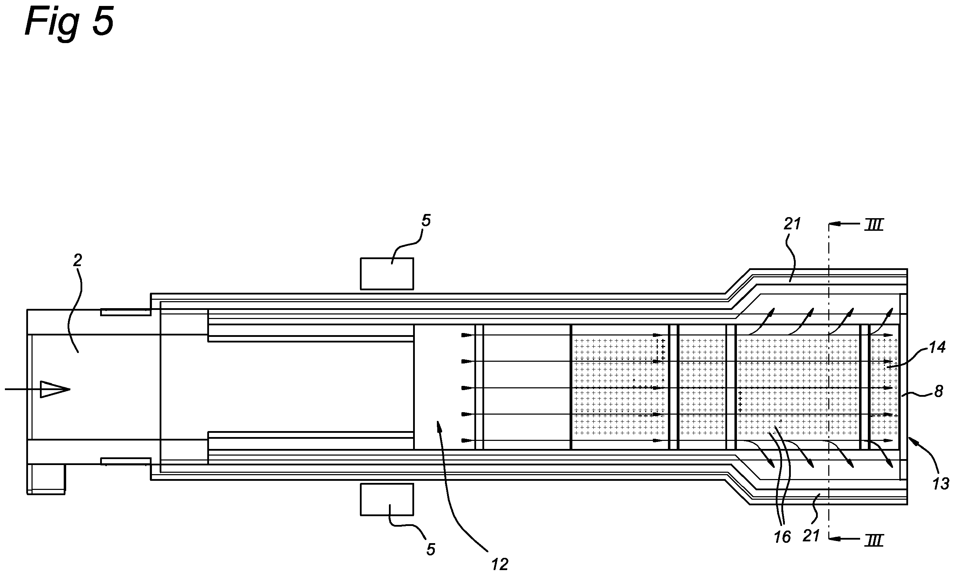

Each chamber 6, 7 has a fan 10 as well as heating means 11, as will be explained in more detail with reference to Figures 4 and 5. This fan 10 and heating means 11 are situated on the top of the dividing wall indicated in its entirety by 12 and running essentially in the longitudinal direction through the chamber 6. Air is sucked out of the chamber below the dividing wall 12 by the fan 10 and is forced past the heating means 11. At the end of the dividing wall 12 the air heated in this way is moved downwards to where the conveyor belt 2 with the products thereon is situated. The air then flows back into the chamber below the dividing wall 12.

According to the invention, the hot air flow guide means, indicated in their entirety by 13, are provided in this region, by means of which hot air flow guide means the hot air is forced transversely to and against the surface of the conveyor belt 2. The effect of this flow is that the products on the conveyor belt 2 are subjected to relatively powerful jets, which result in an increased browning effect. The hot air flow guide means therefore comprise two plates 14, 15 in which a large number of jet holes or jet pipes 16 are situated. An end panel 17, 18 is provided at the downstream end of each of the plates 14, 15. The upper end panel 17 extends between the upper plate 14 and the dividing wall 12; the lower end panel 18 extends from the lower plate 15 to just above the base of the tray 3. The conveyor belt makes the return run between the bottom edge of the end panel 18 and the base of the tray 3.

According to a first possibility, the hot air coming from the heating means 11 can be directed perpendicularly to the belt surface over the entire length of the plates 14, 15. According to another possibility, said air flow can remain concentrated in the region that is situated between the end of the dividing wall 12 and the partition wall 8. That is achieved by the flaps 19, 20, which can be moved from a raised position (shown by broken lines) to an active position extending transversely to the plates 14, 15, as shown by solid lines.

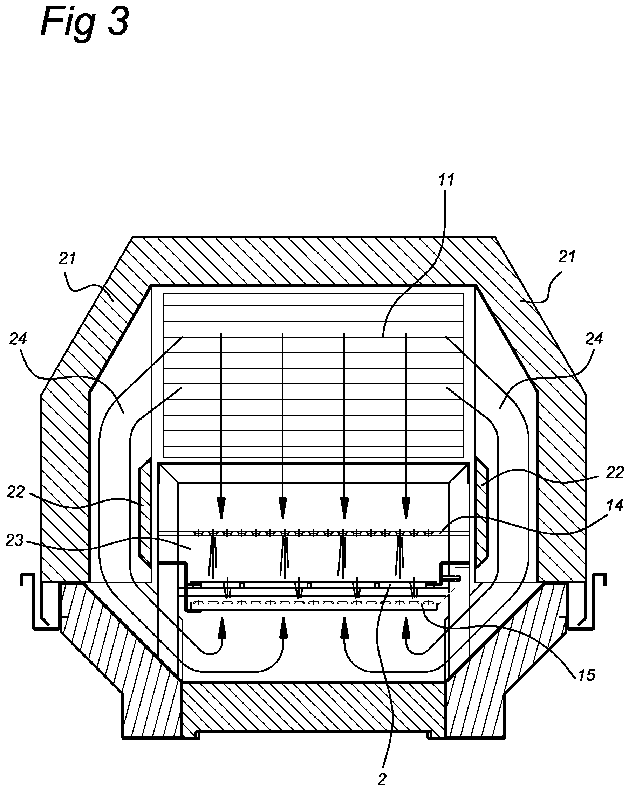

In connection with the feed of hot air to the lower plate 15, at the location of the region between the end of the dividing wall 12 and the partition wall 8 the cap 4 is widened by the expanded sections 21. Since the dividing wall 12 is slidable, this region can be enlarged or reduced. This means that the flow volume can be distributed as desired over the top and the bottom of the conveyor belt 2. The cross-section of Figure 3 is taken at the location of these expanded sections 21. As can be seen in this cross-section, longitudinal boundaries 22 extend in this region on either side of the conveyor belt 2, which longitudinal boundaries should ensure that the hot air does not flow transversely over the belt, but is fed directed vertically upwards from below.

## Claims

1. Continuous oven for the treatment of food products comprising an elongated housing (1), an endless conveyor belt (2) that extends in the longitudinal direction through the housing (1) and on which food products can be conveyed over a stretch between an input and an output of the oven, hot air heating means (10, 11), as well as hot air flow guide means (12-22) for making hot air flow in the longitudinal direction along the conveyor belt over part of said stretch, wherein the hot air flow guide means (12-22) are also arranged for making hot air flow transversely to and directed towards a surface of the conveyor belt, wherein the hot air flow guide means (12-22) are arranged for making hot air flow in the transverse direction to a surface of the conveyor belt over another part of said stretch and wherein a divider (12) extends above the conveyor belt (2), above which divider (12) a heat source (11) for heating the air is situated, return openings being situated at both ends of said divider (12) for making the air circulate past the heat source (11) and in the longitudinal direction along the conveyor belt (2), **characterized in that**, the conveyor belt (2) is accommodated in an air jet chamber (23) over at least part of its length, wherein the air jet chamber (23) is bounded by at least one longitudinal boundary (14, 15, 22) that extends along the conveyor belt, wherein the longitudinal boundary (14, 15, 22) is provided with passages (16) for generating jets of air, wherein the longitudinal boundary (14) is connected to the divider (12) and wherein the longitudinal boundary comprises boundary plates (14, 15) that extend above and below the conveyor belt and are each provided with passages (16), wherein the divider comprises a divider plate (12) extending above the upper boundary plate (14), which divider plate (12) and upper boundary plate (14) are connected to one another by means of a transverse panel (17), wherein the lower boundary plate (15) is connected to a transverse panel (18) which extends to the base of the housing (1).

2. Continuous oven according to Claim 1, wherein the hot air flow guide means (12-22) comprise jet means for delivering jets of hot air in the direction of, and essentially perpendicularly to, a surface of the conveyor belt (2).

3. Continuous oven according to Claim 2, wherein the jet means (14) extend above the conveyor belt (2).

4. Continuous oven according to Claim 1 -3, wherein the jet means (15) extend below the conveyor belt (2).

5. Continuous oven according to Claim 1, wherein a fan (10) is provided for circulation of the air.

6. Continuous oven according to Claim 5, wherein the fan (10) is situated at the location of one of the return openings.

7. Continuous oven according to Claim 6, wherein the divider (12) is extended as far as one of the longitudinal ends of the housing (1) and the fan (10) is connected to a return opening in the divider (12) near said longitudinal end.

8. Continuous oven according to Claim 1, wherein the longitudinal boundary has boundary plates (22) extending alongside the conveyor belt on either side.

9. Continuous oven according to Claim 1, wherein a passage (24) for hot air is situated on either side of the longitudinal boundary, which passages (24) extend essentially in the vertical direction.

10. Continuous oven according to Claim 1, wherein the divider plate (12) and the upper boundary plate (14) partially overlap.

11. Continuous oven according to Claim 1, wherein the upper boundary plate (14) projects in the longitudinal direction relative to the divider plate (12) and the transverse panel (17) is situated at the end of the upper boundary plate (14) which overlaps the divider plate.

12. Continuous oven according to Claim 1, wherein the part of the air jet chamber (23) that is delimited by the divider plate (12), the upper boundary plate (14) and the transverse panel can be shut off by means of a flap (19).

13. Continuous oven according to Claim 1, wherein the divider plate (12) has a variable length for varying the size of the return opening situated opposite the fan (10).

14. Continuous oven according to Claim 1, wherein the transverse panel (18) extends to the base, leaving a free passage for the return part of the conveyor belt.

15. Continuous oven according to Claim 1 or 14, wherein the lower boundary plate (15) projects in the longitudinal direction relative to the divider plate (12) and the transverse panel (18) is situated at the end of the lower boundary plate (15) which overlaps the divider plate (12).

16. Continuous oven according to Claim 15, wherein the part of the air jet chamber (23) that is delimited by the divider plate (12), the lower boundary plate (15) and the
transverse panel (18) can be shut off by means of a flap (20).

17. Continuous oven according to one of Claims 1 - 16, wherein the housing (1) comprises two chambers (6, 7) which are separated by a partition (8), in which partition (8) there is a passage (9) through which the conveyor belt (2) is run, in each of which chambers respective hot air heating means (10, 11) and hot air guide means (12-22) are provided for setting various processing conditions.

## Patentansprüche

1. Durchlaufofen zur Behandlung von Nahrungsmitteln, umfassend ein längliches Gehäuse (1), ein EndlosFörderband (2), das sich in Längsrichtung durch das Gehäuse (1) erstreckt und auf dem Nahrungsmittel über eine Strecke zwischen einem Eingang und einem Ausgang des Ofens befördert werden können, Heißluft-Heizmittel (10, 11) sowie Heißluft-Strömungsführungsmittel (12-22) zum Veranlassen, dass Heißluft in Längsrichtung entlang des Förderbands über einen Teil der Strecke strömt, wobei
die Heißluft-Strömungsführungsmittel (12-22) auch angeordnet sind zum Veranlassen, dass Heißluft quer zu einer, und in Richtung auf eine, Oberfläche des Förderbands strömt, wobei die Heißluft-Strömungsführungsmittel (12-22) angeordnet sind zum Veranlassen, dass Heißluft in Querrichtung zu einer Oberfläche des Förderbands über einen anderen Teil der Strecke strömt und wobei sich ein Teiler (12) oberhalb des Förderbands (2) erstreckt, oberhalb des Teilers (12) eine Wärmequelle (11) zum Erwärmen der Luft angeordnet ist, Rückführöffnungen an beiden Enden des Teilers (12) angeordnet sind zum Veranlassen, dass die Luft an der Wärmequelle (11) vorbei und in Längsrichtung entlang des Förderbands (2) zirkuliert,
**dadurch gekennzeichnet, dass**
das Förderband (2) über zumindest einen Teil seiner Länge in einer Luftstromkammer (23) untergebracht ist, wobei die Luftstromkammer (23) von mindestens einer Begrenzung in Längsrichtung (14, 15, 22) begrenzt ist, die sich entlang des Förderbands erstreckt, wobei die Begrenzung in Längsrichtung (14, 15, 22) mit Durchlässen (16) zum Erzeugen von Luftströmen bereitgestellt ist, wobei die Begrenzung in Längsrichtung (14) mit dem Teiler (12) verbunden ist und wobei die Begrenzung in Längsrichtung Begrenzungsplatten (14, 15) umfasst, die sich ober- und unterhalb des Förderbands erstrecken und jeweils mit Durchlässen (16) bereitgestellt sind, wobei der Teiler eine Teilerplatte (12) umfasst, die sich oberhalb der oberen Begrenzungsplatte (14) erstreckt und die Teilerplatte (12) und die obere Begrenzungsplatte (14) mittels einer Quertafel (17) miteinander verbunden sind, wobei die untere Begrenzungsplatte (15) mit einer Quertafel (18) verbunden ist, die sich zum Boden des Gehäuses (1) erstreckt.

2. Durchlaufofen nach Anspruch 1, wobei die Heißluft-Strömungsführungsmittel (12-22) Ausstoßmittel zum Zuführen von Heißluftströmen in Richtung auf eine, und im Wesentlichen senkrecht zu einer, Oberfläche des Förderbands (2) umfassen.

3. Durchlaufofen nach Anspruch 2, wobei sich die Ausstoßmittel (14) oberhalb des Förderbands (2) erstrecken.

4. Durchlaufofen nach Anspruch 1 -3, wobei sich die Ausstoßmittel (15) unterhalb des Förderbands (2) erstrecken.

5. Durchlaufofen nach Anspruch 1, wobei ein Gebläse (10) für die Zirkulation der Luft bereitgestellt ist.

6. Durchlaufofen nach Anspruch 5, wobei das Gebläse (10) an der Stelle von einer der Rücklauföffnungen angeordnet ist.

7. Durchlaufofen nach Anspruch 6, wobei sich der Teiler (12) so weit wie eins der längsgerichteten Enden des Gehäuses (1) erstreckt und das Gebläse (10) mit einer Rücklauföffnung im Teiler (12) in der Nähe des längsgerichteten Endes verbunden ist.

8. Durchlaufofen nach Anspruch 1, wobei die Begrenzung in Längsrichtung Begrenzungsplatten (22) aufweist, die sich auf beiden Seiten entlang des Förderbands erstrecken.

9. Durchlaufofen nach Anspruch 1, wobei ein Durchlass (24) für Heißluft an beiden Seiten der Begrenzung in Längsrichtung angeordnet ist, deren Durchlässe (24) sich im Wesentlichen in vertikaler Richtung erstrecken.

10. Durchlaufofen nach Anspruch 1, wobei sich die Teilerplatte (12) und die obere Begrenzungsplatte (14) teilweise überlappen.

11. Durchlaufofen nach Anspruch 1, wobei die obere Begrenzungsplatte (14) in Längsrichtung bezogen auf die Teilerplatte (12) vorspringt und die Quertafel (17) am Ende der oberen Begrenzungsplatte (14) angeordnet ist, welche die Teilerplatte überlappt.

12. Durchlaufofen nach Anspruch 1, wobei der Teil der Luftstromkammer (23), der von der Teilerplatte (12) begrenzt wird, die obere Begrenzungsplatte (14) und die Quertafel mittels einer Klappe (19) abgesperrt werden können.

13. Durchlaufofen nach Anspruch 1, wobei die Teilerplatte (12) eine variable Länge zum Variieren der Größe der Rücklauföffnung, die gegenüber dem Gebläse (10) angeordnet ist, aufweist.

14. Durchlaufofen nach Anspruch 1, wobei sich die Quertafel (18) zum Boden erstreckt und einen freien Durchlass für den zurückkehrenden Teil des Förderbands lässt.

15. Durchlaufofen nach Anspruch 1 oder 14, wobei die untere Begrenzungsplatte (15) in Längsrichtung bezogen auf die Teilerplatte (12) vorspringt und die Quertafel (18) am Ende der unteren Begrenzungsplatte (15), welche die Teilerplatte (12) überlappt, angeordnet ist.

16. Durchlaufofen nach Anspruch 15, wobei der Teil der Luftstromkammer (23), der durch die Teilerplatte (12), die untere Begrenzungsplatte (15) und die Quertafel (18) begrenzt wird, mittels einer Klappe (20) abgesperrt werden kann.

17. Durchlaufofen nach einem der Ansprüche 1-16, wobei das Gehäuse (1) zwei Kammern (6,7) umfasst, die durch eine Trennwand (8) getrennt sind, wobei in der Trennwand (8) ein Durchlass (9) vorhanden ist, durch den das Förderband (2) geführt wird, wobei in jeder der Kammern jeweilige Heißluft-Heizmittel (10,11) und Heißluft-Führungsmittel (12-22) zum Einstellen von verschiedenen Verarbeitungsbedingungen bereitgestellt sind.

## Revendications

1. Four continu pour le traitement de produits alimentaires, comprenant un boîtier allongé (1), une courroie transporteuse sans fin (2) qui s'étend dans la direction longitudinale à travers le boîtier (1) et sur laquelle des produits alimentaires peuvent être transportés sur une section entre une entrée et une sortie du four, des moyens de chauffage d'air chaud (10, 11), ainsi que des moyens de guidage de flux d'air chaud (12-22) pour produire un flux d'air chaud dans la direction longitudinale le long de la courroie transporteuse sur une partie de ladite section, les moyens de guidage de flux d'air chaud (12-22) étant également prévus pour produire un flux d'air chaud transversalement à une surface de la courroie transporteuse et en direction de celle-ci, les moyens de guidage de flux d'air chaud (12-22) étant prévus pour produire un flux d'air chaud dans la direction transversale à une surface de la courroie transporteuse sur une autre partie de ladite section, et un diviseur (12) s'étendant au-dessus de la courroie transporteuse (2), au-dessus duquel diviseur (12) est située une source de chaleur (11) pour chauffer l'air, des ouvertures de retour étant situées aux deux extrémités dudit diviseur (12) pour faire circuler l'air devant la source de chaleur (11) et dans la direction longitudinale le long de la courroie transporteuse (2),
**caractérisé en ce que** la courroie transporteuse (2) est reçue dans une chambre à jet d'air (23) sur au moins une partie de sa longueur, la chambre à jet d'air (23) étant délimitée par au moins une bordure longitudinale (14, 15, 22) qui s'étend le long de la courroie transporteuse, la bordure longitudinale (14, 15, 22) étant pourvue de passages (16) pour générer des jets d'air, la bordure longitudinale (14) étant reliée au diviseur (12) et la bordure longitudinale comprenant des plaques de bordure (14, 15) qui s'étendent au-dessus et en dessous de la courroie transporteuse et qui sont chacune pourvues de passages (16), le diviseur comprenant une plaque de diviseur (12) s'étendant au-dessus de la plaque de bordure supérieure (14), laquelle plaque de diviseur (12) et laquelle plaque de bordure supérieure (14) sont reliées l'une à l'autre au moyen d'un panneau transversal (17), la plaque de bordure inférieure (15) étant reliée à un panneau transversal (18) qui s'étend jusqu'à la base du boîtier (1).

2. Four continu selon la revendication 1, dans lequel les moyens de guidage de flux d'air chaud (12-22) comprennent des moyens de jet pour fournir des jets d'air chaud dans la direction d'une surface de la courroie transporteuse (2) et essentiellement perpendiculairement à celle-ci.

3. Four continu selon la revendication 2, dans lequel les moyens de jet (14) s'étendent au-dessus de la courroie transporteuse (2).

4. Four continu selon les revendications 1 à 3, dans lequel les moyens de jet (15) s'étendent en dessous de la courroie transporteuse (2).

5. Four continu selon la revendication 1, dans lequel un ventilateur (10) est prévu pour la circulation de l'air.

6. Four continu selon la revendication 5, dans lequel le ventilateur (10) est situé à l'emplacement de l'une des ouvertures de retour.

7. Four continu selon la revendication 6, dans lequel le diviseur (12) s'étend jusqu'à l'une des extrémités longitudinales du boîtier (1) et le ventilateur (10) est relié à une ouverture de retour dans le diviseur (12) à proximité de ladite extrémité longitudinale.

8. Four continu selon la revendication 1, dans lequel la bordure longitudinale présente des plaques de bordure (22) s'étendant de chaque côté le long de la courroie transporteuse.

9. Four continu selon la revendication 1, dans lequel un passage (24) pour de l'air chaud est situé de chaque côté de la bordure longitudinale, lesquels passages (24) s'étendent essentiellement dans la direction verticale.

10. Four continu selon la revendication 1, dans lequel la plaque de diviseur (12) et la plaque de bordure supérieure (14) se chevauchent partiellement.

11. Four continu selon la revendication 1, dans lequel la plaque de bordure supérieure (14) fait saillie dans la direction longitudinale par rapport à la plaque de diviseur (12) et le panneau transversal (17) est situé à l'extrémité de la plaque de bordure supérieure (14) qui chevauche la plaque de diviseur.

12. Four continu selon la revendication 1, dans lequel la partie de la chambre à jet d'air (23) qui est délimitée par la plaque de diviseur (12), la plaque de bordure supérieure (14) et le panneau transversal peut être fermée au moyen d'un volet (19) .

13. Four continu selon la revendication 1, dans lequel la plaque de diviseur (12) présente une longueur variable pour faire varier la taille de l'ouverture de retour située à l'opposé du ventilateur (10).

14. Four continu selon la revendication 1, dans lequel le panneau transversal (18) s'étend jusqu'à la base, en laissant un passage libre pour la partie de retour de la courroie transporteuse.

15. Four continu selon la revendication 1 ou 14, dans lequel la plaque de bordure inférieure (15) fait saillie dans la direction longitudinale par rapport à la plaque de diviseur (12) et le panneau transversal (18) est situé à l'extrémité de la plaque de bordure inférieure (15) qui chevauche la plaque de diviseur (12).

16. Four continu selon la revendication 15, dans lequel la partie de la chambre à jet d'air (23) qui est délimitée par la plaque de diviseur (12), la plaque de bordure inférieure (15) et le panneau transversal (18) peut être fermée au moyen d'un volet (20).

17. Four continu selon l'une quelconque des revendications 1 à 16, dans lequel le boîtier (1) comprend deux chambres (6, 7) qui sont séparées par une cloison (8), dans laquelle cloison (8) est prévu un passage (9) à travers lequel passe la courroie transporteuse (2), dans chacune desquelles chambres, des moyens de chauffage d'air chaud (10, 11) et des moyens de guidage d'air chaud (12-22) sont respectivement prévus pour régler des conditions de traitement diverses.
